# EUROPEAN PATENT SPECIFICATION

(11) **EP 3 423 296 B1**
(45) Date of publication and mention of the grant of the patent: **25.03.2020**
(21) Application number: 17714032.4
(22) Date of filing: 27.02.2017
(51) Int. Cl.: B60C 27/16, B60C 27/06, B60C 15/02

(54) **ELEMENT FOR TYRE**
ELEMENT FÜR REIFEN
ÉLÉMENT POUR PNEU

(30) Priority: 29.02.2016 GB 201603502; 29.02.2016 NO 20160335
(43) Date of publication of application: 09.01.2019
(73) Proprietor: Technium AS, 1414 Trollåsen (NO)
(72) Inventor: AMUNDSEN, Paul Magne, N-1412 Sofiemyr (NO); ANDENES, Sigmund, N-0272 Oslo (NO)
(74) Representative: Acapo AS
(86) International application number: PCT/NO2017/050053
(87) International publication number: WO 2017/150983

(56) References cited:
- AT-B- 392 761
- DE-U1- 29 719 314
- GB-A- 510 999
- GB-A- 190 929 614
- US-A- 795 906
- US-A- 3 260 294

## Description

### Field of the invention

The present invention relates to a system for attaching an element to a tyre, an element and a method for attaching such an element to a tyre, according to the preamble of the independent patent claims.

### Background of the invention

A tyre for a vehicle, such as a car, lorry, or trucks comprises in general a ply; beads; belts; sidewalls; shoulders; tread; and sipes and grooves. The plies are made of layers of fabric that make up the skeleton of the tyre, and are typically made of fibre cords that are woven together and coated with rubber, allowing the tyre to be flexible but not elastic. The beads are made from high-strength braided steel coated in rubber and create an airtight seal between the tyre and the rim of the wheel. Steel belts may be placed around the tyre to reinforce strength and provide rigidity. The sidewalls are the area of extra thick rubber that runs from the bead to the treads and gives the tyre lateral stability. The shoulder is a small bevelled edge where the treads meets the sidewalls and its design and construction play an important role in how the tyre helps take corners. Treads are the soft area of the tyre where rubber meets the road, providing both a cushion and grip. Sipe and groove is the part of the tyre configuration formed by deep grooves that allow the tyre to disperse water, snow and mud. Sipes are the smaller grooves or cuts made in the tread blocks themselves to give extra grip, which is especially important in a tyre made for snow and ice.

A tyre for bicycles comprises similarly a casing, covered by a rubber tread and provided with a bead or clincher for attachment to a rim. The bicycle tyre casing provides the necessary resistance against stretching to contain the internal air pressure while remaining enough flexibility to conform to the ground surface. The tread is a part of the tyre that touches the ground during regular use, as described above. The profile of the tread is usually curved, matching the shape of the casing inside it and allowing the tyre to roll to the side as the bicycle leans for turning or balancing. The sidewalls of the casing, i.e. the part on each side extending between the tread and the bead are not being intended to contact the ground. This part of the tyre may be referred to as a side of the tyre.

In order to prevent slipping or skidding of vehicles when driven on snow road or icy road, it is widely used to fit chains on the tyre or mounting snow tyres. However, in the case of using the chains, the service life of the tyre is shortened due to wear and load concentrated on contact points between the chains and tyre. Since many areas of the tyre wherein the chains are not positioned, are kept in contact with road surface, occurrence of slip can still not be avoided. Another issue is the lack of space for chains in the area between the tyre and the vehicle, such as the wheel arc, and the discomfort when driving with chains. If existing methods should be used for attaching snow chains to bicycle tyres, it often becomes a conflict with the vehicle breaking systems.

In the case of mounting snow tyres the replacement operation is cumbersome and time consuming and the effect may be insignificant. Further there is a cost issue, as one need to keep two complete sets of tyres for each vehicle. Yet another issue is that one vehicle might be used for different purposes, and thus several types of treads might be necessary.

In US 2012/0305152 A1 and US 2010/0200136 A1 it is described a tyre having a tread which can be replaced because the tyre is worn or because the vehicle should be used on another type of surface, i.e. from paved roads to rough terrain. The tyre according to US 2010/0200136 A1 is provided with a recess that extends circumferentially around the tyre and accommodates a removable riding surface. The tread may thus vary by replacing the riding surface. The removable riding or tread surface is fastened within the recess by attachment mechanisms. However, the riding surface tends to unfasten due to the natural distortion, deformation and stretching during use of vehicle tyres.

In GB 191118452 A it is described a band to be disposed circumferentially around a tyre, to prevent the tyre from puncturing. The fastening of the band depends on the pneumatic pressure inside the tyre, and if the pressure is not sufficient, the band will loosen and fall off the tyre.

Other known methods for replacing a tread on a tyre involves use of screws, pins, Velcro, etc. directly under the tread, and require considerable efforts during attachment. The fastening may directly inhibit the natural movements, stretching and deformation of tyre during usage, and this will substantially reduce the characteristics of the tyre, and the user experience.

US 3260294 A, GB 510999 A and DE 29719314 U1 describe treads attached by dual-lock, zipper and velcro, respectively.

### Objects of the present invention

All vehicle tyres have the same basic construction as pointed out above, and it is mainly the tread pattern and tread rubber type that define the tyre characteristics such as winter tyre, off-road tyre or racing tyre. Changing the tyres entirely involve considerable efforts, and is unnecessary when only the tread needs to be replaced. An object of the invention is thus to provide a system that safely attaches a tread, riding surface, tyre cover, or similar on a vehicle tyre, preferably a bicycle tyre. The riding surface should not slide circumferentially in relation to the tyre nor should any substances such as ice, pebbles or the similar be allowed to access in between the tyre and the riding surface.
Another object of the invention is to provide a user friendly method for attaching and removing such alternative tread and to provide a durable attachment, without reducing the characteristics of the tyre.
Finally, it is an object that the device should not reduce the elasticity of the tyre, both stretching and deformation occurring during normal use of the tyre, such as a bicycle tyre, should be allowed even when a tyre cover is mounted onto the tyre with a system according to the invention.

### Summary of the invention

The objects of the invention are met by a system for attaching an element with a riding surface to a tyre, an element to be attached to the tyre, and a method for attaching such an element according to the characterizing part of the independent claims. Further features, embodiments or alternatives are defined in the corresponding dependent claims.

The invention relates to a system for attaching an element with a riding surface or tread to a tyre, for instance a conventional bicycle tyre. The system comprises at least one elongated member configured to be fastened along the circumference of a side of the tyre, and in that the element and the member are provided with mutually interlocking means for engagement with each other when the element is attached to the tyre.

The element to be attached is in the form of a rectangular configuration with a length more or less corresponding to the circumferential length of a tyre and a width large enough to surround a tyre crosswise covering the tread of the tyre and extending at least partly down the side wall along each side. The element is preferably flexible, and may also be elastic both in longitudinal direction and crosswise, allowing the element to be wrapped around the tyre in both said directions. The element is described as a rectangular, and it may be flat, but in another embodiment it may have a U-shaped cross-section. In case of a U-shaped cross-section the form should correspond the tyre which the element is to be mounted on, and thereby the element will bear closely against the surface of the tyre.

The mutually interlocking means for attaching the element to the member(s) are provided along elongated sides of the element and member, wherein the sides face each other when the element is arranged on the tyre. Further, the means should preferably be configured to be positioned on a side of the tyre.

By "mutually interlocking means" it is herein meant that once the means are fastened to each other, they will act as one part, until they are released again. The parts are not dependent on any third factor to stay fastened, such as air pressure of the tyre or the similar. The preferred means is a zipper, but a velcro, dual-lock, zip-lock may also be used.

By the term " side of the tyre" or "side wall of the tyre" it is herein meant the area of the tyre from the rim to the riding surface, as discussed above. If used on a bicycle tyre, the riding surface includes the area of the tyre bearing against the ground even during a sudden turn when the wheel is inclined at an angle to the ground. Further, when riding the bike on rough ground, or with different air pressure inside the tyre, possibly due to changing temperature, the mutually interlocking means should not come in conflict with the rim or become a part of the riding surface. A person skilled in the art would know what part of the tyre would be the "side of the tyre" based on this information. In a preferred embodiment, the means should be positioned more than 1 cm away from the rim, but not more than 3/5 of the height of the tyre, which is on the side of the tyre.

In a preferred embodiment, the device comprises two members being fastened to opposite sides of the tyre, wherein the element is attached to both members.

By the term "opposite sides of the tyre" it is herein meant that one member should be fastened to one side of the wheel, and the other member should be fastened to the second side of the wheel. If used on a car, one side of the wheel would be facing outwards and the other side would be facing inwards underneath the car. It is preferred that the members are fastened symmetrically along both sides of the tyre. By "elongated members" and "elongated element" it should be understood that the member and element are longer than they are wide, and when "elongated member" should be "fastened along the circumference" it should be understood that the member should be fastened in such a way that its longer side is arranged in the circumference direction of the wheel.

The riding surface of the element to be attached to the tyre is adapted to different grounds, for instance pavement or terrain, or different road conditions such as slippery, or snowy conditions. The suitable element will thus depend on the ground, and should be replaced when the ground conditions changes. The element preferably have a length corresponding to the outer circumference of the tyre, however, the same function will be achieved even if the element is longer or shorter. In case the element is longer, the ends of the element will overlap, and in case the element is shorter, there will be a gap between the ends.

The width of the element should correspond to the distance from one side of the tyre, over the top, and to the other side of the tyre. In case two members are fastened to the tyre, one on each side, the width of the element should correspond to the distance between the members to which the element should be attached. It is however preferred that the width of the element is shorter than the distance between the members in such a way that the element must be stretched upon attachment. In this way differences in air pressure, and thus distance between the members will be encountered by stretch of the element without affecting the effect of the element. This also makes it possible that one element may fit to more types of tyres.

The element is provided with means for engagement with corresponding means on the member, along its longer side. When the system comprises two members fastened on both sides of the tyre, the element is provided with means along both its longitudinal opposite sides. The means may be fastened directly to the element, or they may be fastened to a second member which in turn is fastened to the element.

In an alternative embodiment, the element is provided with means for engagement along one longitudinal side, and a non-elastic wire is fastened to the opposite longitudinal side of the element. The ends of the wire are arranged in such a way that they may be connected to each other, and the wire may be tightened. When using such an element, only one member fastened to the tyre is necessary. When attaching such an element to the tyre, the element should be placed over the tyre, the longitudinal side comprising the wire should be on the opposite side to the member. The ends of the wire are connected to each other and the wire is tightened until the corresponding longitudinal side of the element is at the desired place along the side of the tyre. The means on the element and the member may be attached to each other before or after the tightening of the wire.

Reference throughout the specification to "one embodiment" or "an embodiment" means that a particular feature, structure, or characteristic described in connection with an embodiment is included in at least one embodiment of the subject matter disclosed. Thus, the appearance of the phrases "in one embodiment" or "in an embodiment" in various places throughout the specification is not necessarily referring to the same embodiment. Further, the particular features, structures or characteristics may be combined in any suitable manner in one or more embodiments.

In an alternative embodiment, the element having the riding surface is only attached to a part of the tyre, leaving other parts uncovered. In another alternative embodiment, the member is only fastened to parts of the tyre, however many members may be used in a row around the circumference, leaving uncovered parts between. The element may then be attached to the row of elements and cover the whole tyre, or it may be used a corresponding number of elements.

The riding surface of the element may be a tread of different types, a spiked tread, a course tread, a rubber surface without any tread pattern, an inflatable rubber surface, a fabric, a surface of rubber and fibres combined, or any combinations of these.

In one embodiment the member comprises one longitudinal side to be fastened between the rim of the wheel and the tyre, and one longitudinal side provided with means for engaging the element. The member has preferably a length corresponding to the circumference of the tyre at the place of fastening, and a width corresponding to the distance from the rim of the wheel to the place of attaching to the element. As discussed above, the mutually interlocking means for engaging the member and the element should be on the side of the tyre.

In a preferred embodiment, it is the pressure from the inside of the tyre, for instance from an inner tube towards the rim which holds the first member(s) in the required position. In one embodiment the side of the member, to be fastened between the rim of the wheel and tyre, has a protrusion which will render the fastening even more secure. In an alternative embodiment, the ends of the elongated member may be attached to each other, and the member will be a circle. The circumference of inner part, being the side to be fastened between the rim and the tyre may be similar or smaller than the circumference of the rim, and thereby the fastening of the first member will be similar to the fastening of the tyre to the rim.

The members may be fastened to the wheel, even when an element is not attached to the tyre. In this way, the user may fasten the members once, and only use an element when convenient. The members may be fastened to the wheel in the autumn, and the user may attach an element with a spiked riding surface when the road is slippery and remove it once the road is dry. This may vary even during one day.

In an alternative embodiment, the member is an integrated part of the tyre, exposing the means for engaging the corresponding means of the element. In yet another alternative embodiment the member is fastened to the tyre by being fitted into a premade track on the side of the tyre, by means of screws, nails, velcro or the similar being obvious to a person skilled in the art. In this case the member may be fastened to the tyre and function as an integrated part of the tyre, regardless of whether an element is attached or not.

The member and the element comprise mutually interconnecting means for engaging each other. These means attach the element to the tyre, and must thus be sufficiently strong to keep the element in place during use of the tyre, even on rough and demanding surfaces. Further the means should be easy to engage and disengage, withstand repeated use and rough conditions such as dirt and water.

The means should preferably be continuous, meaning that the element is not engaged to the first member only at separate fastening points. In this way the element may not twist or rotate in relation to the tyre, and it will not be possible for water, ice and/or dirt to cross the means, and come into the area between the element and the tyre. Preferably the means may be opened and closed in one continuous movement, at the same time as they allow the element to be stretched during attachment.

In a preferred embodiment the means for engaging the member and element is a zipper, wherein the zipper teeth are exposed along the adjacent sides. The zipper slider should preferably be on the element, as the members may be fastened to the tyre even without using an element, and thus the slider would be exposed to rougher conditions if fastened to the member.

The element may be mounted on any tyre, regardless of the pattern of the riding surface of the tyre. However, in an alternative embodiment, the tyre has a smooth surface which will give a good grip towards the underside of the element, and in yet another embodiment, the surface of the tyre and the underside of the element may have patterns giving some friction towards each other, and assisting the attachment of the element.

The invention also comprises a method for attaching an element with a riding surface to a tyre, when using a system as described above. The method comprises the following steps:
a) fastening at least one member to a side the tyre,
b) engaging the means for mutual interlocking attachment on the element to the corresponding means on the member.

If the means for mutual interlocking attachment is a tooth of a zipper, then the method will comprise a step for closing the zipper and engaging the whole element to the whole member.

If the first members are an integrated part of the tyre, then step a) is omitted. Further, if an element should be replaced, then step a) should be replaced by a step of removing an element already attached to the tyre.

When the member should be fastened between the rim and the tyre, the member preferably comprises one side having a protrusion to be fastened between the rim of the wheel and the tyre, and one side comprising the means for engaging the element. The tyre should be sufficiently deflated to fit one side of the first member, the side having a protrusion, between the rim of the wheel and the tyre, in such a way that the protrusion will engage an inward protrusion of the rim. This should be done along the whole circumference of the rim, and possibly on both sides of the rim. The rim normally comprises an inward protrusion to engage the ends of the tyre. When the first member(s) is fastened, the tyre should be inflated again, and due to the air pressure inside the tyre, the first member(s) will be fastened between the tyre and the rim.

Once the first member(s) is fastened, the element with the riding surface should be attached. When using two elements, this is done by engaging the means of the element with the members. In case the engaging means is a zipper, the zipper slider should engage the zipper teeth on both the member and the element, and be pulled along the length of the zipper, and thus attach the element to the tyre.

If the element comprises a non-elastic wire along one side, as described above, the wire should be attached first, and then the means of the element should engage the means of the member.

In one embodiment, the method comprises a further step for fastening the ends of the element to each other. This may for instance be done with an elastic band, tying the ends to each other, a clips, a magnet, velcro or the similar, which will be obvious to a person skilled in the art.

The method for attaching an element with a riding surface to a tyre according to the invention is fast and easy, and once the members are fastened one does not need to deflate the tyre to replace the riding surface or to add a spiked surface to the tyre. The system according to the invention will not interfere with the rest of the vehicle, and thus it is independent on the type rim or wheel and as it does not embrace the rim in any way, it will also work with all types of brakes.

The invention will now be described by means of the enclosed figures. The different parts of the figures are not necessarily in scale to each other, as the figures are merely for illustrating the invention.

### Description of the Figures

Embodiments of the present invention will now be described, by way of example only, with reference to the following Figures wherein:
Figure 1 shows schematically a side view of a bicycle wheel with a replaceable element having a riding surface on a tyre;
Figure 2 shows a cross section of the wheel shown in Figure 1, indicating the rim of the wheel, but not any spokes;
Figure 3 shows schematically in perspective a cross section through Figure 1, only showing a portion of the tyre and rim;,
Figure 4 shows schematically a cross section of a second embodiment of the invention, without an element with a riding surface; and
Figure 5 shows the embodiment of Figure 4 with an element with riding surface attached to the tyre.

### Description of preferred embodiments of the invention

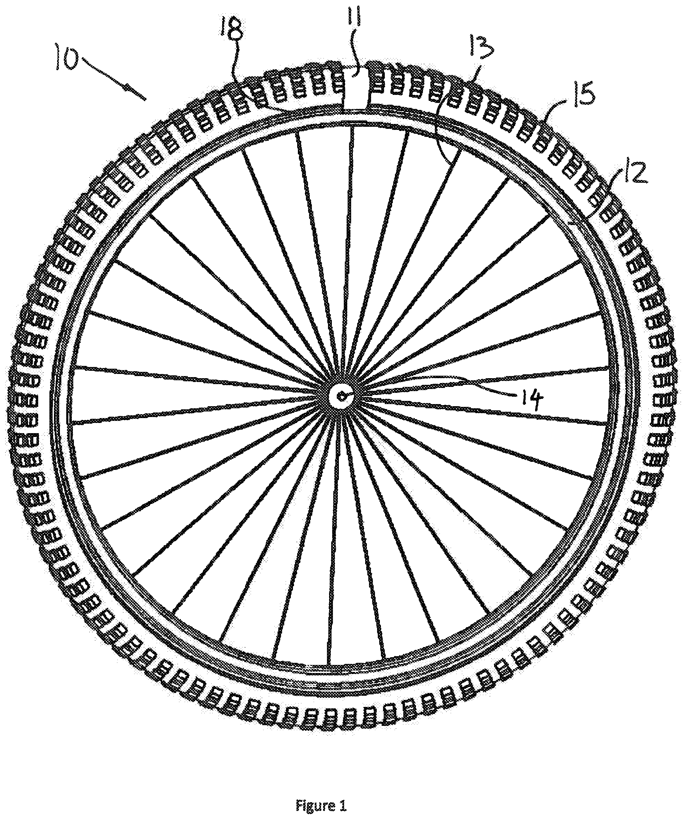

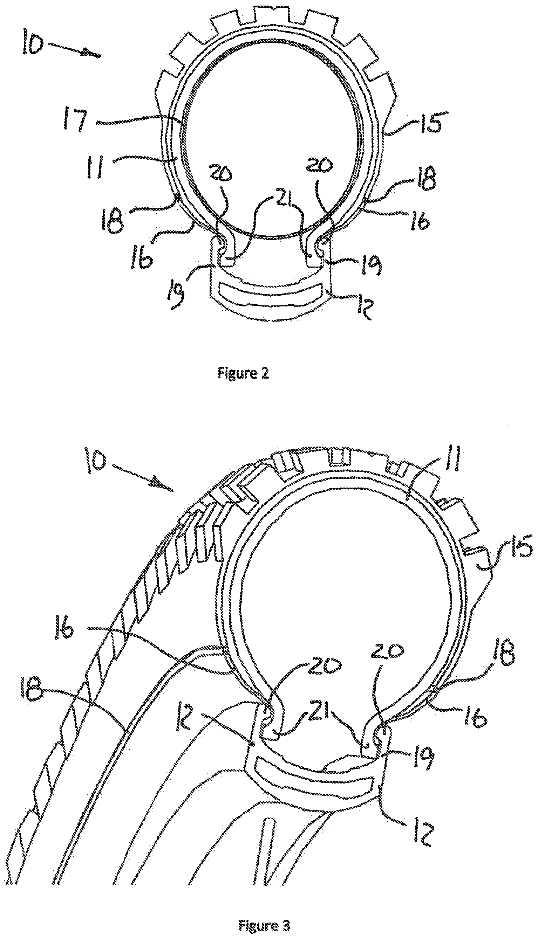

Figure 1 shows schematically a bicycle wheel 10 from one side. The tyre 11 is covered of an element 15 (see Figure 2) bearing a riding surface attached with a system according to the present invention. The wheel 10 comprises as usual a hub 14, a number of spokes 13, rim 12 and a tyre 11 fastened to the rim 12 in a conventional way. Figures 2 and 3 show a cross section of the wheel 10 with, and without, an inner tube 17 respectively.

The system comprises two members 16, each fastened between the rim 12 of the wheel 10 and the tyre 11, on opposite sides of the tyre 11. When the members 16 are to be mounted, the tyre 11 and/or the inner tube 17 as the case may be, must be slightly deflated to make room between the tyre 11 and the rim 12, whereupon the members 16 are arranged at the desired position between the tyre 11 and the rim 12. When the tyre 11 or inner tube 17 is inflated again, the members 16 will be forced towards the rim 12 and fastened or locked from movement by the pressure inside the tyre 11. When fastened, the members 16 protrude along the side wall of the tyre 11, and are provided with means for engaging corresponding means on the element.

The element 15 has a length corresponding more or less to the circumferential length of the tyre 11, while the width corresponds to the distance across the arc of the tyre 10 from one of the attachment members 16 to the other. The element is provided with mutual interlocking means for engagement being configured to engage to the means on the members, in order to attach the element 15 to the tire 11, along a common contact line 18. As shown in the Figures, the means of the element is attached to one member on one side of the wheel, and another member on the other side of the wheel, the entire arc of the tyre 11 being covered by the element 15.

In the shown embodiment, both the underside of the element and the riding surface of the tyre are smooth and will give some friction towards each other when the wheel is rolling. In other, not shown embodiments, the adjacent faces may be arranged to increase the friction, and/or the tyre surface may have a patterned riding surface.

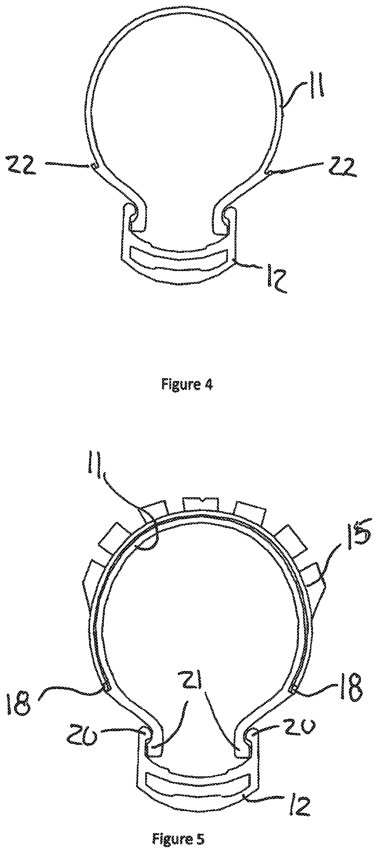

Figure 4 and 5 show a second embodiment of the invention, corresponding to the embodiment shown in figure 2 and 3, but the members are integrated parts of the tyre. In Figure 4 the means of the member is shown as protruding edge 22, but it is actually a part of a zipper, and in Figure 5 an element having a riding surface is attached to the tyre by means of the zipper shown in Figure 4.

In the disclosed embodiments, the attachment between the means along the peripheral edge of the members 16 and the corresponding means along the peripheral sides of the element 15, shown as common contact line 18 in the Figures, is positioned closer to the edge of the rim 12 than to the riding or contact surface of the tyre11. It should be appreciated, however, that the positioning of such joint may be anywhere along the side wall of the tyre, but not higher than 3/5 of the height of the tyre.

As indicated in the Figures the rim 12 is provided with two upwards projecting arms 19, terminated at their free ends with an inwards projecting bead or bulb 20, while the tyre 11 preferably is provided with a corresponding outwards projecting bead or bulb 21. The corresponding end of the members 16 may preferably, but not necessarily be provided with a curved end so as to enhance the fixing of the members 16, enhancing the locking effect between inner surface of the rim 12 and the lower, external surface of the tyre 11.

The example above is given to illustrate the invention and should not be used to interpret the following claims limiting. The scope of the invention is not limited by the example given above, but the following claims. Modifications and amendments of the invention, being obvious to a person skilled of the art, should also be included in the scope of the invention.

## Claims

1. System for attaching an elongated element (15) with a riding surface to a tyre (11), **characterized in that** the system comprises at least one elongated member (16) configured to be fastened along the circumference of a side of the tyre (11), and **in that** the element (15) and the member (16) are provided with mutually interlocking means being zipper, velcro, dual-lock or zip-lock, for engagement with each other when the element (15) is attached to the tyre (11).

2. System according to claim 1, **characterized in that** the mutually interlocking means are provided along elongated sides of the element (15) and member (16), wherein the sides face each other when the element (15) is arranged on the tyre (11).

3. System according to any one of the preceding claims, **characterized in that** the system comprises two members (16), being fastened to opposite sides of the tyre (11), wherein the element (15) is provided with mutual interlocking means on both elongated sides, and attached to both members (16).

4. System according to any one of the preceding claims, **characterized in that** the riding surface of the element (15) is provided with a tread, or a spiked fabric.

5. System according to any one of the preceding claims, **characterized in that** the member (16) comprises one end to be fastened between the rim (12) of the wheel (10) and the tyre (11), and one end comprising the zipper for engaging the means of the element (15).

6. System according to any one of claims 1-4, **characterized in that** the member (16) is integrated into the side wall of the tyre (11).

7. Elongated element (15) to be attached to a tyre (11) by a system according to any one of claims 1-6, comprising a riding surface being **characterized by** means for mutual interlocking engagement with a member (16) being fastened to the tyre (11).

8. Element (15) according to claim 7, **characterized in that** the element (15) has means for mutual interlocking engagement with members (16), along both longitudinal sides.

9. Method for attaching an element (15) with a riding surface to a tyre (11), when using a system for attachment according to any one of claims 1-5, **characterized by** comprising the following steps:
a) fastening at least one member (16) to a side of the tyre (11), and
b) engaging the means for mutual interlocking attachment on the element (15) with the corresponding means on the member (16).

10. Method according to claim 9, wherein the means for mutual attachment is a zipper, **characterized by** comprising another step,
c) closing the zipper and engaging the whole element (15) to the whole member (16), whereby the element will be attached to the tyre.

11. Method according to claim 9, **characterized in that** the fastening of the member (16) to the tyre (11) is performed by inserting a part of the member (16) between the tyre (11) and the rim (12) of the wheel (10).

12. Method according to any one of claims 9-11, when the element (15) has means for mutual attachment along both longitudinal sides, **characterized in that** two members (16) are fastened to the tyre (11), one on each side, and that adjacent means along one elongated side of the element (15) and the adjacent member (16) engage each other.

13. Method according to any one of claim 9-12, **characterized by** comprising a further step for fastening the ends of the riding surface to each other.

## Patentansprüche

1. System zum Befestigen eines länglichen Elements (15) mit einer Fahrfläche an einem Reifen (11),
**dadurch gekennzeichnet, dass** das System mindestens ein längliches Teil (16) umfasst, das zur Befestigung entlang des Umfangs einer Seite des Reifens (11) konfiguriert ist, und dass das Element (15) und das Teil (16) mit gegenseitig ineinandergreifenden Mitteln, die Reißverschluss, Klettverschluss, Druckverschluss oder Zip-Lock-Verschluss sind, zum gegenseitigen Eingriff, wenn das Element (15) an dem Reifen (11) befestigt ist, bereitgestellt sind.

2. System nach Anspruch 1, **dadurch gekennzeichnet, dass** die gegenseitig ineinandergreifenden Mittel entlang der Längsseiten von Element (15) und Teil (16) bereitgestellt sind, wobei die Seiten einander zugewandt sind, wenn das Element (15) auf dem Reifen (11) angeordnet ist.

3. System nach einem der vorangehenden Ansprüche, **dadurch gekennzeichnet, dass** das System zwei Teile (16) umfasst, die auf gegenüberliegenden Seiten des Reifens (11) befestigt sind,
wobei das Element (15) mit gegenseitigen Verriegelungsmitteln auf beiden Längsseiten bereitgestellt und an beiden Teilen (16) befestigt ist.

4. System nach einem der vorangehenden Ansprüche, **dadurch gekennzeichnet, dass** die Fahrfläche des Elements (15) mit einer Lauffläche oder einem Spike-Gewebe bereitgestellt ist.

5. System nach einem der vorangehenden Ansprüche, **dadurch gekennzeichnet, dass** das Teil (16) ein Ende umfasst, das zwischen der Felge (12) des Rades (10) und dem Reifen (11) befestigt werden soll,
und ein Ende, das den Reißverschluss zum Eingriff mit den Mitteln des Elements (15) umfasst.

6. System nach einem der Ansprüche 1-4, **dadurch gekennzeichnet, dass** das Teil (16) in die Seitenwand des Reifens (11) integriert ist.

7. Längliches Element (15), das durch ein System nach einem der Ansprüche 1-6 an einem Reifen (11) befestigt werden soll, umfassend eine Fahrfläche, die durch Mittel zum gegenseitigen verriegelnden Eingriff mit einem Teil (16), das an dem Reifen (11) befestigt ist, gekennzeichnet ist.

8. Element (15) nach Anspruch 7, **dadurch gekennzeichnet, dass** das Element (15) Mittel zum gegenseitigen verriegelnden Eingriff mit Teilen (16) entlang beider Längsseiten aufweist.

9. Verfahren zum Befestigen eines Elements (15) mit einer Fahrfläche an einem Reifen (11), wenn ein System zum Befestigen nach einem der Ansprüche 1-5 verwendet wird, **dadurch gekennzeichnet, dass** es die folgenden Schritte umfasst:
a) Befestigen mindestens eines Teils (16) an einer Seite des Reifens (11), und
b) in Eingriff bringen der Mittel zum gegenseitigen verriegelnden Eingriff am Element (15) mit den entsprechenden Mitteln am Teil (16).

10. Verfahren nach Anspruch 9, wobei das Mittel zur gegenseitigen Befestigung ein Reißverschluss ist, **dadurch gekennzeichnet, dass** es einen weiteren Schritt umfasst,
c) Schließen des Reißverschlusses und in Eingriff bringen des gesamten Elements (15) mit dem gesamten Teil (16),
wodurch das Element an dem Reifen befestigt wird.

11. Verfahren nach Anspruch 9, **dadurch gekennzeichnet, dass** das Befestigen des Teils (16) an dem Reifen (11) durch Einsetzen eines Teils des Teils (16) zwischen dem Reifen (11) und die Felge (12) des Rades (10) durchgeführt wird.

12. Verfahren nach einem der Ansprüche 9-11, wenn das Element (15) Mittel zur gegenseitigen Befestigung entlang beider Längsseiten aufweist, **dadurch gekennzeichnet, dass** zwei Teile (16) an dem Reifen (11) befestigt sind,
eines auf jeder Seite, und dass benachbarte Mittel entlang einer Längsseite des Elements (15) und des benachbarten Teils (16) ineinandergreifen.

13. Verfahren nach einem der Ansprüche 9-12, **dadurch gekennzeichnet, dass** es einen weiteren Schritt zum gegenseitigen Befestigen der Enden der Fahrfläche umfasst.

## Revendications

1. Système de fixation sur un pneu (11) d'un composant allongé (15) avec une surface de roulement,
**caractérisé en ce que** le système comporte au moins un élément allongé (16) configuré pour être fixé le long de la circonférence d'un côté du pneu (11),
et **en ce que** le composant (15) et l'élément (16) sont dotés de moyens de verrouillage mutuel, tels que des glissières, des velcros, des dual-lock ou des zip-lock, destinés à interagir l'un avec l'autre lorsque le composant (15) est fixé sur le pneu (11).

2. Système selon la revendication 1, **caractérisé en ce que** les moyens de verrouillage mutuel sont formés le long des côtés allongés du composant (15) et de l'élément (16), où les côtés sont face à face quand le composant (15) est placé sur le pneu (11).

3. Système selon l'une quelconque des revendications précédentes, **caractérisé en ce que** le système comporte deux éléments (16), qui sont attachés sur les côtés opposés du pneu (11), où le composant (15) est pourvu de moyens de verrouillage mutuel sur ses deux côtés allongés, et est attaché aux deux éléments (16).

4. Système selon l'une quelconque des revendications précédentes, **caractérisé en ce que** la surface de roulement du composant (15) est pourvue d'une bande de roulement, ou d'un tissu à pointes.

5. Système selon l'une quelconque des revendications précédentes, **caractérisé en ce que** l'élément (16) comporte une extrémité devant être fixée entre la jante (12) de la roue (10) et le pneu (11), et une extrémité comportant la glissière pour interagir avec le moyen du composant (15).

6. Système selon l'une quelconque des revendications 1 à 4, **caractérisé en ce que** l'élément (16) est intégré dans la paroi latérale du pneu (11).

7. Composant allongé (15) destiné à être fixé sur un pneu (11) par un système selon l'une quelconque des revendications 1 à 6 comportant une surface de roulement étant **caractérisé par** un moyen d'engagement de verrouillage mutuel avec un élément (16) qui est fixé au pneu (11).

8. Composant (15) selon la revendication 7, **caractérisé en ce que** le composant (15) présente un moyen destiné d'engagement de verrouillage mutuel avec des éléments (16), le long des deux côtés longitudinaux.

9. Procédé de fixation d'un composant (15) avec une surface de roulement sur un pneu (11), en utilisant un système de fixation selon l'une quelconque des revendications 1 à 5, **caractérisé en ce qu'**il comporte les étapes suivantes :
a) fixer au moins un élément (16) à un côté du pneu (11), et
b) engager le moyen de fixation par verrouillage mutuel sur le composant (15) avec le moyen correspondant sur l'élément (16).

10. Procédé selon la revendication 9, dans lequel le moyen de fixation mutuelle est une glissière, **caractérisé en ce qu'**il comporte une autre étape,
c) fermer la glissière et engager le composant complet (15) avec l'élément complet (16), ce par quoi le composant sera fixé sur le pneu.

11. Procédé selon la revendication 9, **caractérisé en ce que** la fixation de l'élément (16) au pneu (11) est réalisée en insérant une partie de l'élément (16) entre le pneu (11) et la jante (12) de la roue (10).

12. Procédé selon l'une quelconque des revendications 9 à 11, lorsque le composant (15) présente un moyen de fixation mutuelle le long des deux côtés longitudinaux, **caractérisé en ce que** deux éléments (16) sont fixés au pneu (11), un de chaque côté, et **en ce que** des moyens adjacents le long d'un côté allongé du composant (15) et de l'élément (16) adjacent s'engagent l'un dans l'autre.

13. Procédé selon l'une quelconque des revendications 9 à 12, **caractérisé en ce qu'**il comporte une autre étape de fixation des extrémités de la surface de roulement l'une à l'autre.
